# EUROPÄISCHE PATENTANMELDUNG

(11) **EP 1 591 633 A2**
(43) Veröffentlichungstag der Anmeldung: **02.11.2005**
(21) Anmeldenummer: 05008639.6
(22) Anmeldetag: 20.04.2005
(51) Int. Cl.: F01M 11/00

(54) **Ölwannenanordnung für eine Maschine und/oder ein Getriebe**

(30) Priorität: 30.04.2004 DE 102004021723
(71) Anmelder: Joma-Polytec Kunststofftechnik GmbH, 72407 Bodelshausen (DE)
(72) Erfinder: Maier, Jan, 72116 Mössingen (DE); Maute, Alexander, 72379 Hechingen-Stetten (DE); Heinz, Stefan, 72411 Bodelshausen (DE); Bartholomcyzik, Willi, 67454 Hassloch (DE); Pfitzer, Friedhelm, 72414 Rangendingen (DE)
(74) Vertreter: Knapp, Thomas

(57) **Zusammenfassung**

Eine Ölwannenanordnung (16) für eine Maschine und/oder ein Getriebe umfasst einen wannenförmigen Sammelabschnitt (18) für das Öl. Ferner ist ein mit dem Sammelabschnitt (18) verbundener Befestigungsabschnitt (20) vorhanden, mit dem die Ölwannenanordnung (16) an einem Maschinen- oder Getriebegehäuse befestigt wird. Mittels eines Ölsaugrohrs (32) kann Öl aus dem Sammelabschnitt (18) abgesaugt werden. Es wird vorgeschlagen, dass das Ölsaugrohr (32) wenigstens bereichsweise mit dem Sammelabschnitt (18) einstückig ist.

## Beschreibung

Die Erfindung betrifft eine Ölwannenanordnung für eine Maschine und/oder ein Getriebe, mit einem wannenförmigen Sammelabschnitt für das Öl, mit mindestens einem mit dem Sammelabschnitt verbundenen Befestigungsabschnitt zur Befestigung an einem Maschine- oder Getriebegehäuse, und mit einem Ölsaugrohr, mit dem Öl aus dem Sammelabschnitt abgesaugt werden kann.

Eine Ölwannenanordnung der eingangs genannten Art ist aus der DE 101 19 937 A1 bekannt. Bei dieser ist ein separater Funktionsrahmen vorgesehen, der mit dem Sammelabschnitt verbunden und von dem ein Ölsaugrohr gehalten werden kann. Ein umlaufender kragenartiger Flansch dient zur Befestigung des Sammelabschnitts an der Maschine und/oder dem Getriebe.

Bei der Maschine handelt es sich um eine Brennkraftmaschine.

Aufgabe der vorliegenden Erfindung ist es, eine Ölwannenanordnung der eingangs genannten Art so weiterzubilden, dass sie noch preiswerter hergestellt werden kann und dass im Betrieb der Ölwannenanordnung weniger Geräusche auftreten.

Diese Aufgabe wird bei einer Ölwannenanordnung der eingangs genannten Art dadurch gelöst, dass das Ölsaugrohr wenigstens bereichsweise mit dem Sammelabschnitt einstückig ist.

Die einstückige Ausführung des Sammelabschnitt mit zumindest einem Bereich des Ölsaugrohrs verringert die Anzahl der bei der Montage handzuhabenden Teile, was zu einer Kostenersparnis führt. Darüber hinaus sorgt diese einstückige Ausgestaltung für eine gegenüber dem Sammelabschnitt absolut starre Halterung zumindest des angeformten Bereichs des Ölsaugrohrs, was Vibrationen des Ölsaugrohrs vermindert und somit von diesem ausgehende Geräuschemissionen reduziert.

Vorteilhafte Ausgestaltungen der erfindungsgemäßen Ölwannenanordnung sind in Unteransprüchen angegeben.

Zunächst wird vorgeschlagen, dass der Sammelabschnitt mehrteilig mindestens mit einem in Richtung einer Hochachse gesehen oberen Wannenteil und einem in Richtung der Hochachse gesehen unteren Wannenteil ausgeführt ist, und dass ein insgesamt parallel zur Hochachse verlaufender Bereich des Ölsaugrohrs mit dem oberen Wannenteil einstückig ist. Dies erleichtert die einstückige Herstellung des Ölsaugrohrs mit dem Sammelabschnitt, indem nur eine vergleichsweise einfache Vorrichtung zur Herstellung erforderlich ist, und führt so zu einer weiteren Kostenreduzierung.

In Weiterbildung hierzu wird vorgeschlagen, dass das Ölsaugrohr einen insgesamt parallel zu einer Quer- oder Längsachse verlaufenden Bereich aufweist, der mehrteilig mit einer in Richtung der Hochachse gesehen oberen Schale und einer in Richtung der Hochachse gesehen unteren Schale ausgeführt ist, wobei die obere Schale an das obere Wannenteil angeformt ist. Ein in Quer- oder Längsachse verlaufender Bereich des Ölsaugrohrs gestattet es, eine Einlassöffnung des Ansaugrohres, mit der dieses mit dem Innenraum des Sammelabschnitts fluidisch verbunden ist, an eine für die Ölabsaugung besonders günstige Stelle, beispielsweise in die Mitte des Sammelabschnitts, zu legen. Dennoch kann eine solche Ölwannenanordnung einfach hergestellt werden.

Wenn zwischen unterer Schale und oberer Schale eine Filtereinrichtung angeordnet ist, wenn die obere Schale fluidisch mit dem insgesamt parallel zur Hochachse verlaufenden Bereich des Ölsaugrohrs verbunden ist, und wenn die untere Schale mit dem Innenraum des Sammelabschnitts fluidisch verbunden ist, wird ein leicht in das Ölsaugrohr integrierbarer Filter für das Öl geschaffen, was wiederum die Herstellkosten senkt.

Dadurch, dass an die untere Schale des Ölsaugrohrs ein insgesamt parallel zur Hochachse verlaufender Ansaugstutzen angeformt sein kann, kann die Stelle, an der das Öl aus dem Sammelabschnitt angesaugt wird, an den im Betrieb in Richtung der Hochachse gesehen tiefsten Punkt des Sammelabschnitts gelegt werden, ohne dass die untere Schale des Ölsaugrohrs besonders komplex geformt werden muss.

Denkbar ist dabei auch, den Ansaugstutzen und/oder die untere Schale an den Sammelabschnitt anzuformen. Eine solche einstückige Einheit kann dann besonders leicht mit der anderen einstückigen Einheit, die aus der oberen Schale des Ölsaugrohrs, dem parallel zur Hochachse verlaufenden Bereich des Ölsaugrohres und dem oberen Wannenteil besteht, montiert werden.

Eine andere besonders vorteilhafte Ausgestaltung der erfindungsgemäßen Ölwannenanordnung zeichnet sich dadurch aus, dass an mindestens einen Bereich einer Begrenzungswand des Sammelabschnitts mindestens eine Strömungsführungswand angeformt ist. Durch eine solche Strömungsführungswand kann ein Schwappen des "Ölsees", der im Sammelabschnitt im Betrieb der Ölwannenanordnung vorhanden ist, vermindert werden. Die Strömungsführungswand ist dabei vorzugsweise so ausgeführt, dass beispielsweise beim Einsatz der Ölwannenanordnung in einem Kraftfahrzeug der Ölfluss bei einer Berg- oder Talfahrt sowie bei einer Kurvenfahrt des Kraftfahrzeug beruhigt wird. Die einstückige Ausgestaltung der Strömungsführungswand mit dem Sammelabschnitt führt bei der Herstellung der Ölwannenanordnung ebenfalls zu einer Verringerung der handzuhabenden Teile, was die Herstellkosten senkt.

In Weiterbildung hierzu wird wiederum vorgeschlagen, dass die Strömungsführungswand wenigstens in etwa in Richtung zu einem einlassseitigen Ende des Ölsaugrohrs hin verläuft. Hierdurch wird beispielsweise auch bei einer Kurvenfahrt des Kraftfahrzeugs, in welches die erfindungsgemäße Ölwannenanordnung eingebaut ist, sichergestellt, dass möglichst viel Öl zum einlassseitigen Ende des Ölsaugrohrs hin strömt und von diesem angesaugt werden kann.

Dies wird besonders dadurch unterstützt, dass die Strömungsführungswand bereichsweise hin gekrümmt ist.

Um zu vermeiden, dass sich in den von einer Strömungsführungswand abgetrennten Bereichen der Ölwannenanordnung bzw. des Sammelabschnitts Öl sammeln kann, welches nicht zum Ölsaugrohr gelangen kann, wird vorgeschlagen, dass zwischen dem Boden des Sammelabschnitts und wenigstens einem Bereich der Strömungsführungswand ein Durchlass vorhanden ist.

Die Strömungsführungswand kann auch zur Erhöhung der Steifigkeit der Ölwannenanordnung beitragen. Dieser Beitrag ist dann besonders hoch, wenn die Begrenzungswand des Sammelabschnitts dort, wo die Strömungsführungswand an die Begrenzungswand angeformt ist (Anformungsbereich), mindestens örtlich eine größere Wandstärke aufweist als außerhalb des Anformungsbereichs.

In die gleiche Richtung zielt jene Ausgestaltung der erfindungsgemäßen Ölwannenanordnung, bei welcher wenigstens in der Nähe des Bereichs, in dem die Strömungsführungswand an eine seitliche Begrenzungswand des Sammelabschnitts angeformt ist, ein Befestigungspunkt des Befestigungsabschnitts vorhanden ist.

Ebenfalls zu einer beträchtlichen Erhöhung der Steifigkeit der Ölwannenanordnung trägt bei, wenn wenigstens in der Nähe des Bereichs, in dem die Strömungsführungswand innen an eine seitliche Begrenzungswand des Sammelabschnitts angeformt ist, außen ein Bereich des Befestigungsabschnitts angeordnet ist.

Die Herstellkosten der erfindungsgemäßen Ölwannenanordnung werden nochmals erheblich gesenkt, wenn der Sammelabschnitt und der an ihn angeformte Bereich des Ölsaugrohrs und/oder die an ihn angeformte Strömungsführungswand aus Kunststoff, vorzugsweise durch Spritzgießen und/oder Tiefziehen, hergestellt sind.

Nachfolgend wird ein besonders bevorzugtes Ausführungsbeispiel der vorliegenden Erfindung unter Bezugnahme auf die beiliegende Zeichnung näher erläutert. In der Zeichnung zeigen:
- Figur 1: eine schematische Darstellung einer Brennkraftmaschine und eines Getriebes mit einer gemeinsamen Ölwannenanordnung;
- Figur 2: eine perspektivische Darstellung von schräg oben der Ölwannenanordnung von Figur 1;
- Figur 3: eine Ansicht von unten der Ölwannenanordnung von Figur 1, wobei ein Bereich der Ölwannenanordnung fehlt;
- Figur 4: eine untere Schale eines Bereichs eines Ölsaugrohrs der Ölwannenanordnung der Figuren 2 und 3; und
- Figur 5: einen Schnitt in der Ebene V von Figur 1.

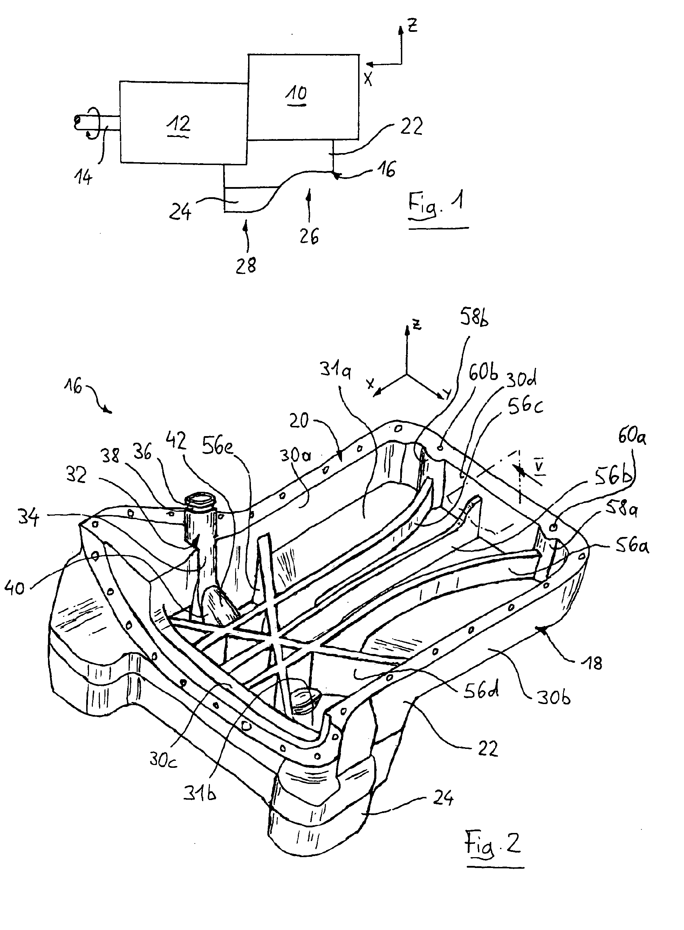

In Figur 1 ist ein Kurbelgehäuse einer Brennkraftmaschine insgesamt mit 10 bezeichnet. An das Kurbelgehäuse 10 ist ein Getriebe 12 angeflanscht, welches eine Abtriebswelle 14 in Drehung versetzt. Im Kurbelgehäuse 10 und im Getriebegehäuse 12 vorhandene bewegliche Teile sind ölgeschmiert. Zum Auffangen des Schmieröls verfügen Kurbelgehäuse 10 und Getriebegehäuse 12 über eine gemeinsame Ölwanne 16. Diese ist stärker im Detail in den Figuren 2 bis 5 dargestellt.

Die Ölwanne 16 verfügt über einen wannenförmigen Sammelabschnitt 18 und einen mit diesem verbundenen flanschartigen Befestigungsabschnitt 20. Über diesen ist die Ölwanne 16 am Kurbelgehäuse 10 und am Getriebegehäuse 12 befestigt.

Der Sammelabschnitt 18 ist mehrteilig ausgeführt und umfasst ein in Richtung einer Hochachse Z gesehen oberes Wannenteil 22 und ein in Richtung der Hochachse Z gesehen unteres Wannenteil 24. Der Sammelabschnitt 18 verfügt ferner über einen in den Figuren 1 und 5 in der rechten Bildhälfte gezeigten Bereich 26, der in Richtung der Hochachse Z gesehen eine geringere Erstreckung aufweist ("flacherer" Bereich) als ein in diesen beiden Figuren in der jeweiligen linken Bildhälfte gezeigter Bereich 28 ("tieferer Bereich). Das untere Wannenteil 24 ist in der Art eines Deckels im "tieferen" Bereich 28 des Sammelabschnitts 18 angeordnet.

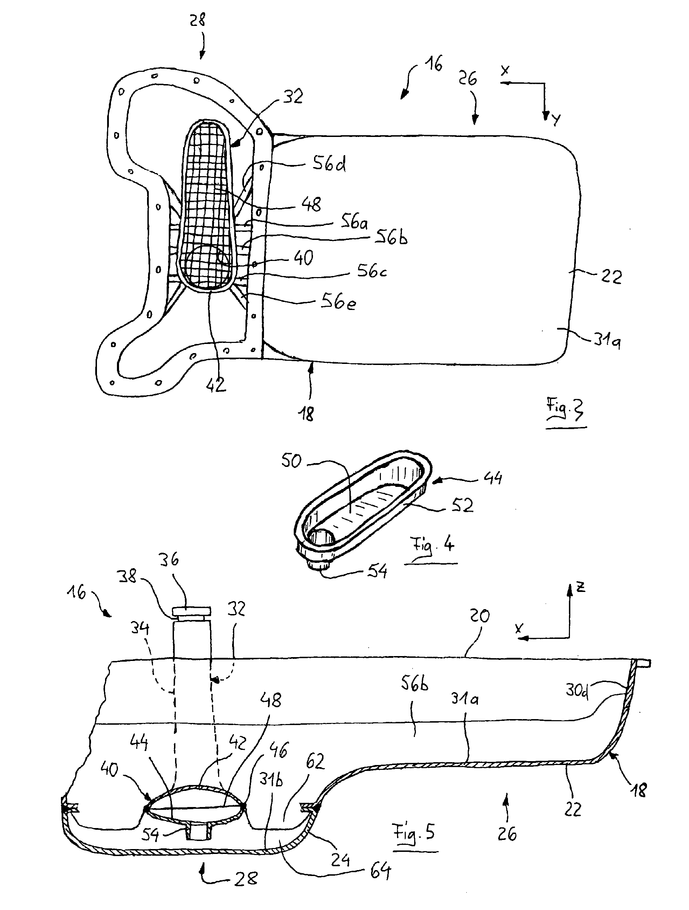

Wie insbesondere aus Figur 3 hervorgeht, hat die Ölwanne 16 insgesamt in der Unteransicht in Richtung der Hochachse Z eine grob viereckige länglich Grundform. Dies wird durch vier Begrenzungswände 30 vorgegeben, nämlich zwei seitliche Begrenzungswände 30a und 30b und zwei Stirnwände 30c und 30d (vgl. Figur 2). Der Sammelabschnitt 18 verfügt ferner über einen Boden 31, der sich vom "flacheren" Bereich 26 (Bodenabschnitt 31a) in einer Z-förmig geschwungenen Krümmung in den "tieferen" Bereich 28 (Bodenabschnitt 31b) hinein erstreckt.

Wie vor allem aus Figur 2 hervorgeht, ist in die Ölwanne 16 beziehungsweise in den Sammelabschnitt 18 ein Ölsaugrohr 32 zumindest bereichsweise einstückig integriert. Das Ölsaugrohr 32 verfügt dabei über einen insgesamt parallel zur Hochachse Z verlaufenden Bereich 34, der an das obere Wannenteil 22 angeformt ist und, wie aus den Figuren 2 und 5 hervorgeht, etwas über den oberen Rand des Sammelabschnitts 18 mit einem Anschlussbereich 36 übersteht. In eine Nut 38 im Anschlussbereich des Ölsaugrohrs 32 kann ein O-Ring eingelegt werden, der bei der Montage der Ölwanne 16 die Verbindung des Ölsaugrohrs 32 mit einem motorseitigen Ölkreislauf abdichtet.

Das Ölsaugrohr 32 verfügt ferner über einen insgesamt parallel zu einer Querachse Y verlaufenden Bereich 40. Dieser ist mehrteilig mit einer in Richtung der Hochachse Z gesehen oberen Schale 42 und einer in Richtung der Hochachse Z gesehen unteren Schale 44 (vgl. Figur 5). Die obere Schale 42 ist einstückig in das obere Wannenteil 22 integriert, wohingegen die untere Schale 44 in 46 mit der oberen Schale 42 verschweißt ist. Aus Figur 3, welche eine Ansicht der Ölwanne 16 von unten in Richtung der Hochachse Z bei abgenommenem unteren Wannenteil 24 des Sammelabschnitts 18 und abgenommener unterer Schale 44 des Ölsaugrohrs 32 zeigt, ist ersichtlich, dass zwischen unterer Schale 44 und oberer Schale 42 eine vorliegend als Sieb ausgebildete Filtereinrichtung 48 angeordnet ist.

Bei der in Figur 5 gezeigten Ausführungsform hat der quer verlaufende Bereich 40 des Ölsaugrohres-32 einen insgesamt ovalen abgeflachten Querschnitt. Möglich ist aber auch, zumindest die untere Schale 44 mit einem flachen Boden 50 und einer seitlichen Begrenzungswand 52 auszugestalten, wie dies in Figur 4 gezeigt ist. Der zwischen der Filtereinrichtung 48 und der unteren Schale 44 des Ölsaugrohrs 32 gelegene Raum ist über einen parallel zur Hochachse Z verlaufenden Ansaugstutzen 54 mit dem Innenraum des Sammelabschnitts 18 verbunden. Der Ansaugstutzen 54 ist dabei an die untere Schale 44 angeformt. Denkbar ist aber auch eine Ausführung, bei der kein Ansaugstutzen, sondern nur eine Öffnung in der unteren Schale 44 vorhanden ist, solange diese möglichst tief und an der gewünschten Stelle liegt.

Die Ölwanne 16 beziehungsweise deren Sammelabschnitt 18 verfügt ferner über drei sich insgesamt in etwa in Richtung einer Längsachse X erstreckende Strömungsführungswände 56a, 56b und 56c, und über zwei im Wesentlichen nur im Bereich 28 des Sammelabschnitts 18 kreuzförmig angeordnete Strömungsführungswände 56d und 56e. Die Längsenden der Strömungsführungswände 56a bis 56c sind an die Stirnwände 30c und 30d, jener der Strömungsführungswände 56d und 56e an die seitlichen Begrenzungswände 30a und 30b des Sammelabschnitts 18 einstückig angeformt. Dabei weist die Stirnwand 30d dort, wo die Strömungsführungswände 56a und 56c angeformt sind, eine örtliche Verdickung 58a beziehungsweise 58b auf.

Im Bereich der beiden Verdickungen 58a beziehungsweise 58b ist wiederum im Befestigungsabschnitt 20 ein Befestigungspunkt 60a beziehungsweise 60b vorhanden, an dem beispielsweise über einen jeweiligen Schraubbolzen die Ölwanne 16 am Kurbelgehäuse 10 befestigt wird. Die hierzu entgegengesetzten Längsenden der Strömungsführungswände 56a bis 56c, die in Figur 2 im vorderen linken Bildbereich angeordnet sind, sind in einem Bereich innen an die Stirnwand 30c angeformt, in dem auf der anderen Seite der Stirnwand 30c, also außen, der flanschartige Befestigungsabschnitt 20 verläuft. Zusätzlich oder alternativ können an den entsprechenden Stellen außen auf der Stirnwand 30c noch Verstärkungsrippen vorhanden sein, welche die Krafteinleitung verbessern (solche Verstärkungsrippen sind in Figur 2 aus Übersichtlichkeitsgründen jedoch nicht dargestellt).

Insbesondere aus Figur 5 ist ersichtlich, dass die Strömungsführungswände 56a bis 56c im "flacheren" Bereich 26 des Sammelabschnitts 18 mit dem Boden 31a des oberen Wannenteils 22 ebenfalls einstückig verbunden sind. Mit einem Bereich 62 ragen diese Strömungsführungswände 56a bis 56c zwar noch etwas in den vom unteren Wannenteil 24 begrenzten Bereich hinein, sie reichen jedoch nicht ganz bis zum Boden 31b des "tieferen" Bereichs 28 hinab. Hierdurch ist zwischen dem Boden 31b des "tieferen" Bereichs 28 des Sammelabschnitts 18 und den Strömungsführungswänden 56 ein Durchlass 64 vorhanden, durch den im Betrieb Öl auch aus den äußersten seitlichen Bereichen des Sammelabschnitts 18 zum Ansaugstutzen 54 gelangen kann. In einem nicht gezeigten Ausführungsbeispiel reichen die Strömungsführungswände 56 auch im "tieferen" Bereich 28 bis zum Boden 31b, derart, dass der Boden 31b an den Strömungsführungswänden 56 anliegt. Hierdurch wird die Stabilität des unteren Wannenteils 24 erhöht und insbesondere die Gefahr einer Rissbildung bei einer Stoß-oder Schlagbelastung des unteren Wannenteils 24 reduziert. Es versteht sich, dass in einem solchen Fall zwischen dem Boden 31b und den Strömungsführungswänden 56 örtliche Aussparungen vorhanden sind, um einen freien Ölfluss zum Ansaugstutzen 54 hin zu gewährleisten.

Die in Figur 1 gezeigte Brennkraftmaschine ist in ein Kraftfahrzeug eingebaut, welches sich parallel zur Längsachse X bewegt. Durch die Strömungsführungswände 56 wird insbesondere bei einer Kurvenfahrt des Kraftfahrzeugs ein Schwappen eines im Sammelabschnitt 18 aufgenommenen "Ölsees" von einer Seite zur anderen verhindert. Außerdem wird die Strömung des Öls vom "flacheren" Bereich 26 zum "tieferen" Bereich 28, aus dem das Öl über das Ölsaugrohr 32 abgesaugt wird, beruhigt. Dies wird besonders dadurch unterstützt, dass die beiden Strömungsführungswände 56a und 56c im "flacheren" Bereich 26 jeweils nach außen zu den entsprechenden seitlichen Begrenzungswänden 30a und 30b hin gebogen sind. Dies führt darüber hinaus zu einer verstärkten Führung des ölstroms zum Ansaugstutzen 54 des Ölsaugrohrs 32 hin.

Durch die beiden kreuzförmig angeordneten Strömungsführungswände 56d und 56e wird insbesondere im "tieferen" Bereich 28 des Sammelabschnitts 18 auch eine Beruhigung des im Sammelabschnitt 18 aufgenommenen Öls in Richtung der Längsachse X erreicht, beispielsweise bei Berg- und Talfahrt beziehungsweise beim Beschleunigen und Abbremsen des Kraftfahrzeugs. Quasi als Nebeneffekt sorgen die Strömungsführungswände 56 auch für eine Versteifung der Ölwanne 16, so dass insbesondere der Boden 31 vergleichsweise dünn ausgeführt werden kann.

Das obere Wannenteil 22 des Sammelabschnitts 18 kann zusammen mit den Strömungsführungswänden 56, dem Bereich 34 sowie der oberen Schale 42 des Bereichs 40 des Ölsaugrohrs 32 einstückig als Kunststoff-Spritzgussteil hergestellt werden. In einem nicht dargestellten Ausführungsbeispiel ist die untere Schale 44 des Bereichs 40 des Ölsaugrohrs 32 einstückig mit dem unteren Wannenteil 24 ausgeführt. Denkbar ist sogar, die Filtereinrichtung 48 als Kunststoffsieb einstückig mit der oberen Schale 42 oder der unteren Schale 44 des Bereichs 40 des Ölsaugrohrs 32 auszuführen.

## Patentansprüche

1. Ölwannenanordnung (16) für eine Maschine (10) und/oder ein Getriebe (12), mit einem wannenförmigen Sammelabschnitt (18) für das Öl, mit mindestens einem mit dem Sammelabschnitt (18) verbundenen Befestigungsabschnitt (20) zur Befestigung an einem Maschinen- oder Getriebegehäuse (10, 12), und mit einem Ölsaugrohr (32), mit dem Öl aus dem Sammelabschnitt (18) abgesaugt werden kann, **dadurch gekennzeichnet, dass** das Ölsaugrohr (32) wenigstens bereichsweise mit dem Sammelabschnitt (18) einstückig ist.

2. Ölwannenanordnung (16) nach Anspruch 1, **dadurch gekennzeichnet, dass** der Sammelabschnitt (18) mehrteilig mindestens mit einem in Richtung einer Hochachse (Z) gesehen oberen Wannenteil (22) und einem in Richtung der Hochachse (Z) gesehen unteren Wannenteil (24) ausgeführt ist, und dass ein insgesamt parallel zur Hochachse (Z) verlaufender Bereich (34) des Ölsaugrohrs (32) mit dem obere Wannenteil (22) einstückig ist.

3. Ölwannenanordnung (16) nach Anspruch 2, **dadurch gekennzeichnet, dass** das Ölsaugrohr (32) einen insgesamt parallel zu einer Quer- oder Längsachse (Y) verlaufenden Bereich (40) aufweist, der mehrteilig mit einer in Richtung der Hochachse (Z) gesehen oberen Schale (42) und einer in Richtung der Hochachse (Z) gesehen unteren Schale (44) ausgeführt ist, wobei die obere Schale (42) an das obere Wannenteil (22) angeformt ist.

4. Ölwannenanordnung (16) nach Anspruch 3, **dadurch gekennzeichnet, dass** zwischen unterer Schale (44) und oberer Schale (42) eine Filtereinrichtung (48) angeordnet ist, dass die obere Schale (42) fluidisch mit dem insgesamt parallel zur Hochachse (Z) verlaufenden Bereich (34) des Ölsaugrohrs (32) verbunden ist, und dass die untere Schale (44) mit einem Innenraum des Sammelabschnitts (18) fluidisch verbunden ist.

5. Ölwannenanordnung (16) nach Anspruch 4, **dadurch gekennzeichnet, dass** an die untere Schale (44) ein insgesamt parallel zur Hochachse (Z) verlaufender Ansaugstutzen (54) angeformt ist.

6. Ölwannenanordnung (16) nach einem der vorhergehenden Ansprüche, **dadurch gekennzeichnet, dass** an mindestens einen Bereich einer Begrenzungswand (30, 31) des Sammelabschnitts (18) mindestens eine Strömungsführungswand (56) angeformt ist.

7. Ölwannenanordnung (16) nach Anspruch 6, **dadurch gekennzeichnet, dass** die Strömungsführungswand (56) wenigstens in etwa in Richtung zu einem einlassseitigen Ende (54) des Ölsaugrohrs (32) hin verläuft.

8. Ölwannenanordnung (16) nach Anspruch 6 oder 7, **dadurch gekennzeichnet, dass** die Strömungsführungswand (56) bereichsweise gekrümmt ist.

9. Ölwannenanordnung (16) nach einem der Ansprüche 6 bis 8, **dadurch gekennzeichnet, dass** zwischen dem Boden (31) des Sammelabschnitts (18) und wenigstens einem Bereich der Strömungsführungswand (56) ein Durchlass (64) vorhanden ist.

10. Ölwannenanordnung (16) nach einem der Ansprüche 6 bis 9, **dadurch gekennzeichnet, dass** eine Begrenzungswand (30) des Sammelabschnitts (18) dort, wo die Strömungsführungswand (56) an die Begrenzungswand (30) angeformt ist (Anformungsbereich), mindestens örtlich eine größere Wandstärke aufweist (58) als außerhalb des Anformungsbereichs.

11. Ölwannenanordnung (16) nach einem der Ansprüche 6 bis 10, **dadurch gekennzeichnet, dass** wenigstens in der Nähe des Bereichs, in dem die Strömungsführungswand (56) an eine seitliche Begrenzungswand (30) des Sammelabschnitts (18) angeformt ist, ein Befestigungspunkt (60) des Befestigungsabschnitts (20) vorhanden ist.

12. Ölwannenanordnung (16) nach einem der Ansprüche 6 bis 11, **dadurch gekennzeichnet, dass** wenigstens in der Nähe des Bereichs, in dem die Strömungsführungswand (56) innen an eine seitliche Begrenzungswand (30) des Sammelabschnitts (18) angeformt ist, außen ein Bereich des Befestigungsabschnitts (20) angeordnet ist.

13. Ölwannenanordnung (16) nach einem der vorhergehenden Ansprüche, **dadurch gekennzeichnet, dass** der Sammelabschnitt (18) und der an ihn angeformte Bereich (34) des Ölsaugrohrs (32) und/oder die an ihn angeformte Strömungsführungswand (56) aus Kunststoff, vorzugsweise durch Spritzgießen und/oder Tiefziehen, hergestellt sind.
